# EUROPÄISCHE PATENTANMELDUNG

(11) **EP 3 026 676 A1**
(43) Veröffentlichungstag der Anmeldung: **01.06.2016**
(21) Anmeldenummer: 14194683.0
(22) Anmeldetag: 25.11.2014
(51) Int. Cl.: H01B 3/40, C08K 5/00, C08K 5/18, C08K 5/3492, C08K 5/38, H01B 7/28, H02K 3/30, H02K 3/40

(54) **Verfahren zum Herstellen einer Hochspannungsisolierung**

(71) Anmelder: Siemens Aktiengesellschaft, 80333 München (DE)
(72) Erfinder: Brockschmidt, Mario, 45131 Essen (DE); Höhner, Rene, 45891 Gelsenkirchen (DE); Kocdemir, Bora, 45357 Essen (DE); Litinsky, Alexander, 45470 Mülheim (DE); Mashkin, Andrey, 50672 Köln (DE); Pohlmann, Friedhelm, 45355 Essen (DE); Schmidt, Guido, 42799 Leichlingen (DE); Staubach, Christian, 45768 Marl (DE); Voß, Simon, 46049 Oberhausen (DE)

(57) **Zusammenfassung**

Die Erfindung betrifft ein Verfahren zum Herstellen einer Hochspannungsisolierung mit den Schritten: Beschichten von nanoskaligen und/oder mikroskaligen anorganischen Partikeln mit Spannungsstabilisatoren, organischen UV-Absorbern und/oder para-Nitroanilinen; Mischen der beschichteten Partikel mit einem Reaktionsharz, um ein Gemisch zu erhalten; und Aushärten des Gemischs. Die Erfindung betrifft ferner die Hochspannungsisolierung und die Verwendung der Hochspannungsisolierung.

## Beschreibung

Die Erfindung betrifft ein Verfahren zum Herstellen einer Hochspannungsisolierung, die Hochspannungsisolierung und die Verwendung der Hochspannungsisolierung.

Elektrische Hochspannungsrotationsmaschinen, wie beispielsweise Generatoren, weisen elektrische Leiter, eine Hochspannungsisolierung und ein Ständerblechpaket auf. Die Hochspannungsisolierung dient dazu, die elektrischen Leiter dauerhaft gegeneinander, gegen das Ständerblechpaket und gegen die Umgebung elektrisch zu isolieren. Beim Betrieb der Maschinen ist die Hochspannungsisolierung elektrisch stark belastetet. Dadurch tritt an den Grenzflächen eine teilentladungsinduzierte Erosion auf, die zur Ausbildung von sog. "Treeing"-Kanälen führt. An den "Treeing"-Kanälen ist die Hochspannungsisolierung nur noch reduziert elektrisch belastbar und es kann zu einem elektrischen Durchschlag der Hochspannungsisolierung kommen. Eine Barriere gegen die Teilentladungen kann durch den Einsatz von Glimmerband erreicht werden. Das Glimmerband wird um die Leiter und die Formspulen der Hochspannungsrotationsmaschinen gewickelt und mit einem Kunstharz imprägniert. Anschließend wird das Kunstharz ausgehärtet.

Zur Verbesserung der Beständigkeit der Hochspannungsisolierung ist der Einsatz von nanoskaligen und/oder mikroskaligen anorganischen Partikeln bekannt, die dem Kunstharz vor dem Imprägnieren und Aushärten zugesetzt werden. Durch die Anwesenheit der Partikel verkürzt sich jedoch die Lebensdauer des Kunstharzes. Dies zeigt sich insbesondere in einer voranschreitenden Polymerisierung des Kunstharzes, welche zu einem Anstieg der Viskosität des Kunstharzes führt und damit die Imprägnierung des Glimmerbandes erschwert.

Aufgabe der Erfindung ist es, ein Verfahren zum Herstellen einer Hochspannungsisolierung bereit zu stellen, wobei sowohl das Kunstharz als auch die Hochspannungsisolierung eine lange Lebensdauer unter elektrischer Belastung haben.

Das erfindungsgemäße Verfahren ist ein Verfahren zum Herstellen einer Hochspannungsisolierung mit den Schritten: Beschichten von nanoskaligen und/oder mikroskaligen anorganischen Partikeln mit Spannungsstabilisatoren, organischen UV-Absorbern und/oder para-Nitroanilinen; Mischen der beschichteten Partikel mit einem Reaktionsharz, um ein Gemisch zu erhalten; und Aushärten des Gemischs.

Die Oberfläche von anorganischen Partikeln weist häufig reaktive Gruppen, wie beispielsweise Hydroxylgruppen, auf. in einem unpolymerisierten, das heißt noch nicht ausgehärteten, Reaktionsharz können die reaktiven Gruppen auf der Partikeloberfläche die Harzmonomere chemisch angreifen und dadurch eine lokale Polymerisierung des Reaktionsharzes verursachen. Diese Polymerisierung erhöht die Viskosität des Reaktionsharzes, wodurch die weitere Verwendung des Reaktionsharzes wie beispielsweise bei der Imprägnierung von Glimmerband erschwert wird. Zudem verkürzt die fortschreitende Polymerisierung die Lebensdauer des Reaktionsharzes. Durch das erfindungsgemäße Beschichten der Partikel vor deren Zugabe zu dem Reaktionsharz werden die reaktiven Gruppen auf der Partikeloberfläche passiviert bzw. von der Partikelumgebung abgeschirmt.

Somit wird ein Kontakt der reaktiven Gruppen mit den Harzmonomeren des Reaktionsharzes verhindert. Dadurch bleibt die Viskosität des Reaktionsharzes über einen längeren Zeitraum stabil und das Reaktionsharz kann dementsprechend länger verwendet werden. Somit erhöht das erfindungsgemäße Verfahren die Lebensdauer des Reaktionsharzes.

Für die Lebensdauer von Hochspannungsisolierungen kommt es insbesondere auf deren Beständigkeit gegenüber Teilentladungen an. Teilentladungen sind lokale elektrische Entladungen, die beispielsweise an Lufteinschlüssen, Gasblasen oder anderen Inhomogenitäten in der Isolierung entstehen können. An diesen Stellen sind die Isoliereigenschaften durch die örtlich geringere Durchschlagsfestigkeit gestört. Dies macht sich durch Teilentladungen bemerkbar. Bei Teilentladungen wird Energie, vor allem in Form von UV-Strahlung und Ionisation, in die Isolierung eingebracht. Dadurch wird die Isolierung zunehmend geschädigt und es kann schließlich zu einem vollen Durchschlag durch die geschwächte Isolierung hindurch kommen. Auf diese Weise verringern Teilentladungen die Lebensdauer von Hochspannungsisolierungen. Folglich muss eine Hochspannungsisolierung gegenüber Teilentladungen und deren schädigenden Wirkungen sehr beständig sein, um dauerhaft zuverlässig zu sein.

Dies wird durch das erfindungsgemäße Verfahren erreicht. Die Spannungsstabilisatoren, organischen UV-Absorber und/oder para-Nitroaniline erhöhen die Langzeitbeständigkeit der Hochspannungsisolierung gegenüber Teilentladungen. Dies führt zu einer Verlängerung der Lebensdauer der Hochspannungsisolierung. Somit ermöglicht das erfindungsgemäße Verfahren das Herstellen einer Hochspannungsisolierung, wobei sowohl das Reaktionsharz als auch die Hochspannungsisolierung eine lange Lebensdauer haben.

Das Beschichten der Partikel kann durch Ausbilden nicht-kovalenter Wechselwirkungen, wie beispielsweise Adhäsion oder Van-der-Waals-Kräfte, oder durch Ausbilden kovalenter chemischer Bindungen zwischen den Spannungsstabilisatoren, UV-Absorber und/oder para-Nitroaniline und der Partikeloberfläche erreicht werden. Es ist bevorzugt, dass die Partikel vollständig beschichtet werden, um die reaktiven Gruppen auf der Partikeloberfläche vollständig von der Partikelumgebung abzuschirmen.

In einer bevorzugten Ausführungsform weist das Verfahren vor dem Aushärten des Gemischs die folgenden Schritte auf: b2) Umwickeln eines elektrischen Leiters mit Glimmerband; b3) Imprägnieren des Glimmerbands aus Schritt b2) mit dem Gemisch. Die Verwendung von Glimmerband vermindert Teilentladungen.

Das Imprägnieren und/oder das Aushärten erfolgen bevorzugt durch ein Vakuum-Druck-Imprägnierungs-Prozess (VPI) und/oder ein Resin-Rich-Verfahren.

Spannungsstabilisatoren, auch "Voltage Stabilizer" genannt, sind chemische Verbindungen, die empirischen Beobachtungen zufolge in der Lage sind, Fehlstellen im ausgehärteten Reaktionsharz-Partikel-Gemisch der Hochspannungsisolierung "auszuheilen". Dadurch verringert sich die teilentladungsinduzierte Erosion des ausgehärteten Gemischs, so dass sich die Lebensdauer der Hochspannungsisolierung verlängert. Durch das Ausheilen der Fehlstellen verleihen Spannungsstabilisatoren der Hochspannungsisolierung zudem eine hohe Beständigkeit gegenüber Teilentladungen.

Die Spannungsstabilisatoren weisen bevorzugt ungesättigte und/oder nicht aktivierte funktionelle chemische Gruppen auf. Diese Gruppen werden durch Teilentladungen aktiviert und bilden die kovalenten Bindungen innerhalb des Reaktionsharzes im ausgehärteten Reaktionsharz-Partikel-Gemisch der Hochspannungsisolierung neu aus.

Die Spannungsstabilisatoren befinden sich vorzugsweise nicht nur auf den Partikeln, sondern zusätzlich auch in dem Reaktionsharz.

Geeignete Spannungsstabilisatoren sind beispielsweise aus US 4,724,248; US 4,305,849 und US 3,649,542 bekannt. Auch Siliziumoxidverbindungen können als Spannungsstabilisatoren verwendet werden.

Die Spannungsstabilisatoren sind bevorzugt aus der Gruppe bestehend aus hochmolekularem Polyethylenglycol, Block- und Propf-Kopolymeren von Polydialkylsiloxanpolyoxyalkylenen, Poly(dimethylsiloxan)Diglycidether terminiert, Thiuramverbindungen, Metallsalzen von Dithiocarbamidsäure, Metallsalzen von Xanthogensäure, Mercaptoimidazolinen, Aldehyd-Anilin-Kondensaten, stickstoffhaltigen Ringverbindungen, Derivaten eines aromatischen Amins und Phenolen ausgewählt.

Das hochmolekulare Polyethylenglycol ist vorzugsweise ein Polyethylenglycol mit mehr als 44 Kohlenstoffatomen, weiter bevorzugt ein Polyethylenglycol mit mehr als 80 Kohlenstoffatomen.

Die Block- und Propf-Kopolymere von Polydialkylsiloxanpolyoxyalkylenen sind vorzugsweise Block- und Propf-Kopolymere von Polydimethylsiloxanpolyoxyethylen.

Bevorzugte Thiuramverbindungen sind Tetramethylthiurammonosulfid, Tetraethylthiurammonosulfid, Tetra-n-propylthiurammonosulfid, Tetra-n-butylthiurammonosulfid, Tetra-n-amylthiurammonosulfid, Tetramethylthiuramdisulfid, Tetraethylthiuramdisulfid, Tetra-n-propylthiuramdisulfid, Tetra-n-butylthiuramdisulfid, Tetra-n-amylthiuramdisulfid, Dimethyldiphenylthiuramdisulfid, Tetramethylthiuramtetrasulfid, Tetraethylthiuramtetrasulfid, Tetra-n-propylthiuramtetrasulfid, Tetra-n-butylthiuramtetrasulfid, Tetra-n-amylthiuramtetrasulfid, und Dipentamethylenthiuramtetrasulfid.

Bevorzugte Metallsalze von Dithiocarbamidsäure sind Natriumdimethyldithiocarbamat, Natriumdiethyldithiocarbamat, Natriumdi-n-butyldithiocarbamat, Nickeldimethyldithiocarbamat, Nickeldiethyldithiocarbamat, Nickeldi-n-propyldithiocarbamat, Nickeldi-n-butyldithiocarbamat, Kobaltdiethyldithiocarbamat, Nickel-n-pentamethylendithiocarbamat, und Wismutdiethyldithiocarbamat.

Bevorzugte Metallsalze von Xanthogensäure sind Zinkmethylxanthogenat, Zinkethylxanthogenat, Zink-n-butylxanthogenat, Kobaltmethylxanthogenat, Kobaltethylxanthogenat, Kobaltbutylxanthogenat, Nickelmethylxanthogenat, Nickelethylxanthogenat, Nickelbutylxanthogenat, Nickel-n-propylxanthogenat, Selenbutylxanthogenat, und Tellurbutylxanthogenat.

Ein bevorzugtes Mercaptoimidazolin ist 2-Mercaptoimidazolin.

Ein bevorzugtes Aldehyd-Anilin-Kondensat ist das Aldehyd-Anilin-Kondensat von Acetaldehyd und Butyraldehyd.

Bevorzugte stickstoffhaltige Ringverbindungen sind Pyridin, 2,3,5,6-Tetrachlorpyridin, Chinolin, Trimethyldihydrochinolin-Polymer, 6-Ethoxy-2,2,4-trimethyl-1,2-dihydrochinolin, und Carbazol.

Bevorzugte Derivate eines aromatischen Amins sind beta-Naphthylamin, N,N'-Diphenylethylendiamin, und 2-Nitro-diphenylamin.

Organische UV-Absorber sind organische Verbindungen, die ultraviolette (UV) Strahlung, das heißt Strahlung im Wellenlängenbereich von etwa 100 nm bis etwa 400 nm, absorbieren und in Wärme umwandeln. Dabei haben die UV-Absorber einen höheren Extinktionskoeffizienten für die UV-Strahlung als das ausgehärtete Reaktionsharz-Partikel-Gemisch. Die absorbierte UV-Strahlung wird durch strahlungslose Übergänge in Wärme umgewandelt. Die UV-Absorber absorbieren vorteilhaft die UV-Strahlung, die bei Teilentladungen in der Hochspannungsisolierung auftritt und die Isolierung schädigen kann. Dadurch erhöhen die UV-Absorber die Lebensdauer der Hochspannungsisolierung.

Die UV-Absorber weisen bevorzugt eine hohe eigene Stabilität gegenüber UV-Strahlung auf.

Die UV-Absorber sind bevorzugt aus der Gruppe bestehend aus Oxalaniliden, Benzophenonen, Benzotriazolen, Phenyltriazinen und Cyanacrylaten ausgewählt.

Die UV-Absorber sind insbesondere 2-Hydroxy-benzophenone, Hexyl-2-[4-(diethylamino)-2-hydroxybenzoyl]benzoat, (2-Hydroxy-4-methoxyphenyl)-phenylmethanon, 4-Hydroxy-2-methoxy-5-(oxo-phenylmethyl)-benzensulfonsäure, 2-(2-Hydroxyphenyl)-benzotriazole, insbesondere 2-(2'-Hydroxy-5'methacryloxyethylphenyl)-2H-benzotriazol, 2-(2-Hydroxyphenyl)-1,3,5-triazine und/oder 2-Cyanacrylate.

para-Nitroaniline sind Elektronen einfangende Verbindungen. Bei Teilentladungen gelangen besonders viele Elektronen in die Isolierung. Diese Elektronen weisen eine hohe kinetische Energie auf und schädigen die Isolierung. Die para-Nitroaniline absorbieren die Elektronen und geben sie zeitverzögert an Nachbarmoleküle oder benachbarte Partikel, die ebenfalls mit para-Nitroanilinen beschichtet sind, weiter. Bei diesem Prozess wird die kinetische Energie der Elektronen zumindest teilweise in Wärme umgewandelt. Dadurch erhöht sich die Lebensdauer der Hochspannungsisolierung.

Zu den para-Nitroanilinen zählen 1-Amino-4-nitrobenzol (para-Nitroanilin) und dessen Derivate. Bevorzugte para-Nitroaniline sind 4-Nitro-7-ethylaminobenzofurazan und/oder 4-Nitro-7-diethylaminobenzofurazan.

Elektronen werden aufgrund des hohen elektrischen Feldes auf die Partikel in der Hochspannungsisolierung gelenkt. Wenn die Elektronen auf die Partikel treffen, gleiten sie seitlich an den Partikeln ab, so dass im Bereich der Interphase zwischen den Partikeln und der Reaktionsharzmatrix eine hohe Konzentration von Elektronen auftritt. Daher ist gerade in diesem Bereich die Beschichtung der Partikel mit Spannungsstabilisatoren und/oder para-Nitroanilinen vorteilhaft.

Die Spannungsstabilisatoren und/oder UV-Absorber sind vorzugsweise nicht Styrol, Vinyltoluol, Alkylacrylat, Alkandioldiacrylat, Silane, Octamethyltrisiloxan, Tetramethyldisiloxan, und/oder Hexamethyldisiloxan.

Es ist bevorzugt, dass das Reaktionsharz ein Epoxidharz, ein Polyesterimid, insbesondere ein ungesättigtes Polyesterimid, ein Polyester, insbesondere ein ungesättigter Polyester, und/oder ein Polyurethan ist. Das Epoxidharz weist bevorzugt Bisphenol-A-diglycidylether, Bisphenol-F-diglycidylether, Phenolnovolake, aliphatische Epoxide und/oder zykloaliphatische Epoxide auf. Weiterhin ist bevorzugt, dass das Epoxidharz ein zyklisches Carbonsäureanhydrid aufweist, insbesondere Maleinsäureanhydrid, Phthalsäureanhydrid, Methylhexahydrophthalsäureanhydrid und/oder Hexahydrophthalsäureanhydrid. Es ist weiterhin bevorzugt, dass das Epoxidharz ein Amin als Härter aufweist. Bei allen vorgenannten Reaktionsharzen handelt es sich um nicht radikalisch polymerisierende Reaktionsharze. Die Monomere dieser Harze werden insbesondere durch Hydroxylgruppen, die sich auf der Oberfläche von anorganischen Partikeln befinden, nucleophil angegriffen. Durch den Angriff tritt die Polymerisierung der Harzmonomere ein. Diese Polymerisierung erschwert die weitere Verwendung des Reaktionsharzes und verkürzt dessen Lebensdauer. Daher ist gerade bei diesen Reaktionsharzen die Beschichtung der Partikel vor deren Zugabe zu dem Reaktionsharz vorteilhaft, um die Lebensdauer des Reaktionsharzes zu verlängern.

Es ist bevorzugt, dass die Spannungsstabilisatoren, organischen UV-Absorber und/oder para-Nitroaniline keine Hydroxylgruppen aufweisen. Dadurch wird sichergestellt, dass die Beschichtung der Partikel keine Polymerisierung der Harzmonomere verursacht.

Die nanoskaligen und/oder mikroskaligen anorganischen Partikel weisen bevorzugt Aluminiumoxid, Aluminiumhydroxid, Siliziumdioxid, Titandioxid, Seltenerdenoxid, Alkalimetalloxid, Metallnitrid, und/oder Schichtsilikate, insbesondere exfolierte oder teilweise exfolierte Schichtsilikate, auf. Diese Stoffe sind besonders für die Verarbeitung in der Hochspannungsisolierung geeignet, da sie selbst elektrisch nicht leitfähig sind. Außerdem sind Partikel, die die genannten Stoffe aufweisen, besonders widerstandsfähig gegenüber Hochspannung.

Die Partikel sind bevorzugt nanoskalige Partikel. Nanoskalige Partikel (Nanopartikel) weisen eine hohe spezifische Oberfläche auf. Durch das hohe Oberfläche-zu-Volumen-Verhältnis besteht eine erhöhte Gefahr, dass die reaktiven Gruppen auf der Partikeloberfläche die Harzmonomere des Reaktionsharzes angreifen. Folglich ist es vorteilhaft, gerade diese Partikel zu beschichten, um das Reaktionsharz vor einer verfrühten Polymerisierung zu schützen.

Das Reaktionsharz wird bevorzugt mit Spannungsstabilisatoren, organischen UV-Absorbern und/oder para-Nitroanilinen gemischt, bevor es mit den beschichteten Partikeln gemischt wird. Der Zusatz der Spannungsstabilisatoren, organischen UV-Absorber und/oder para-Nitroaniline zum Reaktionsharz ermöglicht es, die Langzeitbeständigkeit der Hochspannungsisolierung gegenüber Teilentladungen und deren schädigenden Wirkungen und somit die Lebensdauer der Hochspannungsisolierung noch weiter zu steigern.

Die erfindungsgemäße Hochspannungsisolierung ist eine Hochspannungsisolierung, die mit dem erfindungsgemäßen Verfahren hergestellt worden ist. Die Hochspannungsisolierung weist vorteilhaft eine lange Lebensdauer auf.

In einem weiteren Aspekt betrifft die Erfindung die Verwendung der Hochspannungsisolierung zur Isolierung rotierender elektrischer Maschinen, insbesondere Generatoren.

In elektrischen Hochspannungsrotationsmaschinen, wie beispielsweise Generatoren, ist die Hochspannungsisolierung besonders starken Belastungen ausgesetzt. Daher ist eine lange Lebensdauer der Hochspannungsisolierung für eine dauerhafte Betriebssicherheit der Maschinen besonders wichtig.

Anhand von zwei Beispielen wird im Folgenden die Erfindung näher erläutert.

In einem ersten Beispiel wird eine Hochspannungsisolierung hergestellt, indem zuerst Aluminiumoxid-Partikel mit einem Partikeldurchmesser von etwa 20 nm mit Tetraethylthiuramdisulfid beschichtet werden. Die beschichteten Partikel werden anschließend mit einem Reaktionsharz, das aus einer stöchiometrischen Mischung aus Bisphenol-A-diglycidylether und Phthalsäureanhydrid besteht, gemischt.

Ein elektrischer Leiter wird mit einem Glimmerband umwickelt. In einem "Resin-Rich-Verfahren" wird das Glimmerband anschließend von dem Gemisch, das beim Mischen der beschichteten Partikel mit dem Reaktionsharz erhalten wurde, durchtränkt. Danach wird das Gemisch durch eine Zufuhr von Wärme und von Zinknaphthenat als Reaktionsbeschleuniger ausgehärtet, um die Hochspannungsisolierung fertig zu stellen.

In einem zweiten Beispiel wird eine Hochspannungsisolierung hergestellt, indem zuerst Titandioxid-Partikel mit einem Partikeldurchmesser von etwa 80 nm mit Tetraethylthiuramdisulfid, 2-(2-Hydroxyphenyl)-1,3,5-triazin und para-Nitroanilin beschichtet werden. Die beschichteten Partikel werden anschließend mit einem Reaktionsharz, das aus einer stöchiometrischen Mischung aus Bisphenol-A-diglycidylether und Phthalsäureanhydrid besteht, gemischt. Danach wird das Gemisch durch eine Zufuhr von Wärme und von Zn-Naphthenat als Reaktionsbeschleuniger ausgehärtet, um die Hochspannungsisolierung fertigzustellen.

## Patentansprüche

1. Verfahren zum Herstellen einer Hochspannungsisolierung mit den Schritten:
a) Beschichten von nanoskaligen und/oder mikroskaligen anorganischen Partikeln mit Spannungsstabilisatoren, organischen UV-Absorbern und/oder para-Nitroanilinen;
b1) Mischen der beschichteten Partikel mit einem Reaktionsharz, um ein Gemisch zu erhalten; und
c) Aushärten des Gemischs.

2. Verfahren gemäß Anspruch 1 mit den Schritten:
b2) Umwickeln eines elektrischen Leiters mit Glimmerband;
b3) Imprägnieren des Glimmerbands aus Schritt b2) mit dem Gemisch.

3. Verfahren gemäß Anspruch 1 oder 2,
wobei die Spannungsstabilisatoren aus der Gruppe bestehend aus hochmolekularem Polyethylenglycol, Block- und Propf-Kopolymeren von Polydialkylsiloxanpolyoxyalkylenen, Poly(dimethylsiloxan)Diglycidether terminiert, Thiuramverbindungen, Metallsalzen von Dithiocarbamidsäure, Metallsalzen von Xanthogensäure, Mercaptoimidazolinen, Aldehyd-Anilin-Kondensaten, stickstoffhaltigen Ringverbindungen, Derivaten eines aromatischen Amins und Phenolen ausgewählt sind.

4. Verfahren gemäß einem der vorhergehenden Ansprüche, wobei die UV-Absorber aus der Gruppe bestehend aus Oxalaniliden, Benzophenonen, Benzotriazolen, Phenyltriazinen und Cyanacrylaten ausgewählt sind.

5. Verfahren gemäß Anspruch 4,
wobei die UV-Absorber 2-Hydroxy-benzophenone, Hexyl-2-[4-(diethylamino)-2-hydroxybenzoyl]benzoat, (2-Hydroxy-4-methoxyphenyl)-phenylmethanon, 4-Hydroxy-2-methoxy-5-(oxo-phenylmethyl)-benzensulfonsäure, 2-(2-Hydroxyphenyl)-benzotriazole, insbesondere 2-(2'-Hydroxy-5'methacryloxyethylphenyl)-2H-benzotriazol, 2-(2-Hydroxyphenyl)-1,3,5-triazine und/oder 2-Cyanacrylate sind.

6. Verfahren gemäß einem der vorhergehenden Ansprüche, wobei das Reaktionsharz ein Epoxidharz, ein Polyesterimid, insbesondere ein ungesättigtes Polyesterimid, ein Polyester,
insbesondere ein ungesättigter Polyester, und/oder ein Polyurethan ist.

7. Verfahren gemäß einem der vorhergehenden Ansprüche, wobei die Partikel Aluminiumoxid, Aluminiumhydroxid, Siliziumdioxid, Titandioxid, Seltenerdenoxid, Alkalimetalloxid, Metallnitrid, und/oder Schichtsilikate, insbesondere exfolierte oder teilweise exfolierte Schichtsilikate, aufweisen.

8. Verfahren gemäß einem der vorhergehenden Ansprüche, wobei die Partikel nanoskalige Partikel sind.

9. Verfahren gemäß einem der vorhergehenden Ansprüche, wobei das Reaktionsharz mit Spannungsstabilisatoren, organischen UV-Absorbern und/oder para-Nitroanilinen gemischt wird, bevor es mit den beschichteten Partikeln gemischt wird.

10. Hochspannungsisolierung,
die mit einem Verfahren gemäß einem der Ansprüche 1 bis 9 hergestellt worden ist.

11. Verwendung einer Hochspannungsisolierung gemäß Anspruch 10 zur Isolierung rotierender elektrischer Maschinen, insbesondere Generatoren.
